# EUROPEAN PATENT SPECIFICATION

(11) **EP 1 395 466 B1**
(45) Date of publication and mention of the grant of the patent: **10.08.2005**
(21) Application number: 02738311.6
(22) Date of filing: 24.05.2002
(51) Int. Cl.: B60R 25/00

(54) **VEHICLE SECURITY SYSTEM**
SICHERHEITSSYSTEM FÜR KRAFTFAHRZEUGE
SYSTEME DE SECURITE DE VEHICULES

(30) Priority: 25.05.2001 GB 0112771; 05.06.2001 GB 0113626; 17.08.2001 GB 0120184; 29.04.2002 GB 0209751
(43) Date of publication of application: 10.03.2004
(73) Proprietor: Tiss Limited, Blackpool, Lancashire FY4 1DW (GB)
(72) Inventor: WHOLEY, Brian, Blackpool FY3 9JW (GB); WHOLEY, Ryan, Blackpool FY3 9JW (GB)
(74) Representative: Holmes, Matthew Peter
(86) International application number: PCT/GB2002/002248
(87) International publication number: WO 2002/096725

(56) References cited:
- US-A- 4 816 803
- US-A- 4 935 723
- US-A- 5 111 184
- US-A- 5 406 263
- US-A- 5 969 595

## Description

The present invention relates to a vehicle security system.

Road-going goods vehicles have been used for many years to transport goods. A road-going vehicle typically comprises a tractor unit and a trailer (cargo area) connected via an articulated connection, the trailer being detachable from the tractor unit. Other smaller vehicles comprise a cab and a cargo area provided as a single unit. The term 'trailer' will be used hereinafter to refer to the cargo area of an articulated vehicle or a vehicle comprising a single unit.

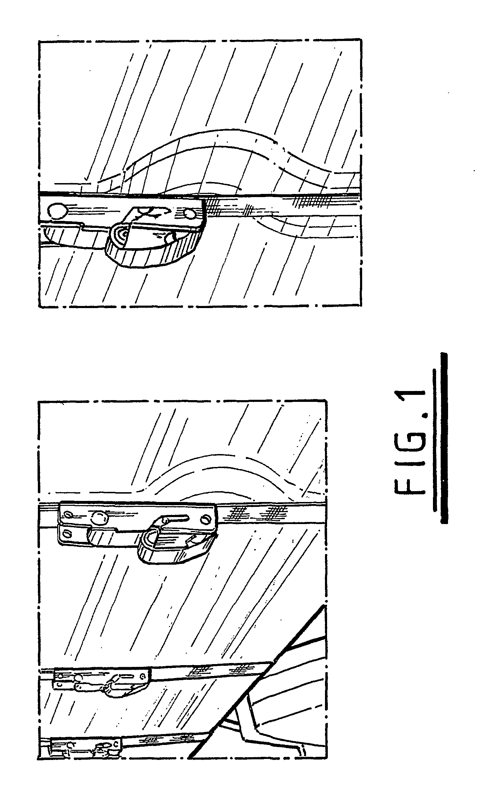

A common form of trailer is provided with a curtain along one side, for example as shown in figure 1. Trailers of this form are known as curtain-siders. When loading the trailer the curtain is drawn to one end of the trailer to allow easy access along the length of the trailer. Once the trailer has been loaded the curtain is extended to close the entire side of the trailer, and is secured in place using spaced apart buckles. An upper end of each buckle is attached to a metal strip approximately four inches wide which runs from the top of the trailer. Webbing extending from the bottom of the trailer is passed through a lower end of each buckle. The buckle is provided with a ratchet system which is used to draw the webbing through the buckle until the curtain has been firmly secured. A variation of the curtain-sider trailer is known as the Euro-liner. In the Euro-liner, trailer posts and planks are located behind the curtain, thereby providing the curtain with rigidity which may help to retain goods which move during transit.

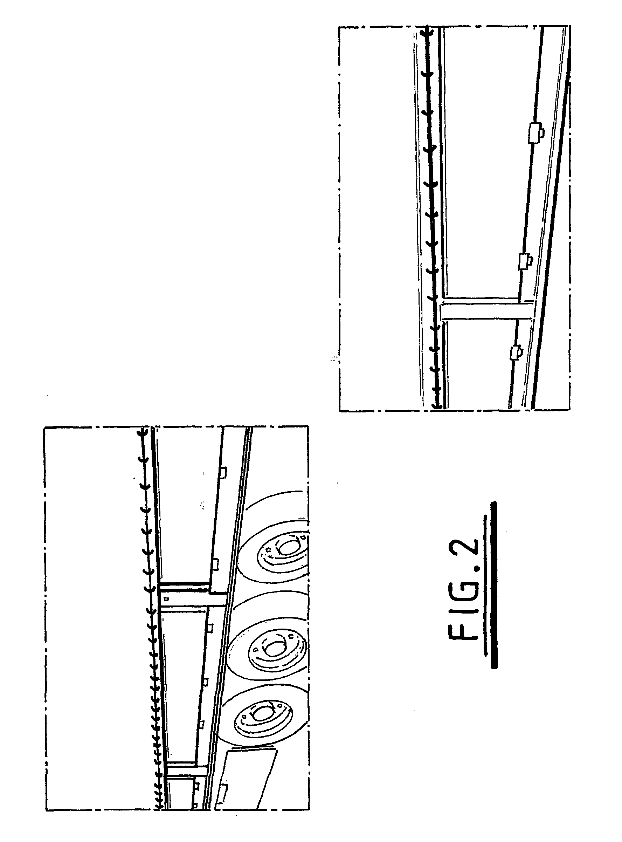

A second form of popular trailer is known as the tilt trailer. The tilt trailer is provided with panels around the edge of the trailer, the panels extending partway up the vertical height of the trailer. The panels are arranged to tilt downwards. Part of a tilt trailer is shown in figure 2. A curtain extends from the top of the trailer and overlaps the panels, thereby enclosing the trailer. When the trailer is to be loaded, the curtain is pulled to one end of the trailer and the panels are hinged downwards to allow easy access to the trailer. Once loading has been completed, the panels are secured in the upright position and the curtain is extended along the trailer, thereby closing the side of the trailer. The curtain is provided with eyeholes which align with rings extending from the panels such that the eyeholes pass over the rings.

All of the above trailers are commonly used to transport goods across borders, and in particular across borders within Europe (including borders within the European Union). A customs system has been developed to provide efficient transport of goods across borders. The customs system is based upon the Transport International Routier (TIR) cord.

When goods are loaded onto a trailer, a CMR note is filled out. The CMR note sets out details of the loaded goods together with the dates upon which the goods will cross borders. A TIR cord is then used to secure the trailer. The TIR cord comprises a cable of approximately one quarter inch diameter threaded steel with a plastic coating. Referring to figure 1, the TIR cord is passed through an opening provided in each buckle of the curtain-sider trailer. The buckle and the opening are configured such that once the cord has passed through the opening it is not possible to open the buckle. The TIR cord is passed around the circumference of the trailer, and the two ends of the cords are sealed together using a numbered customs seal. The seal is conventionally located at the middle of the rear of the trailer. The number of the customs seal is included on the CMR note. Referring to figure 2, for tilt trailers the TIR cord is passed through the rings as shown thereby securing the curtain in place, and is sealed using a numbered customs seal.

The TIR cord remains in place as the vehicle is driven to its destination. Upon arriving at the destination, the receiver of the goods checks that the TIR cord remains in place, and thereby infers that the goods held within the trailer have not been tampered with. The goods held in the trailer should correspond exactly with the goods set out on the CMR note.

In recent years it has become common for immigrants to be smuggled illegally across borders. Many people attempt to move illegally from France to the United Kingdom, and they often attempt to do this by stowing away in a vehicle trailer. The problem of illegal immigrants has become very significant within the last few years, and French and British customs authorities have introduced various measures which attempt to stem the flow of illegal immigrants. These measures include the use of carbon dioxide detectors, X-ray machines, and the introduction of a substantial fine for any haulier whose vehicle is found to contain illegal immigrants (the fine is proportional to the number of immigrants found in the vehicle).

Where a trailer is provided with a TIR cord it is known for an illegal immigrant to stow away on the trailer by cutting the TIR cord in order to gain access to the trailer, and then once aboard have an accomplice pull the TIR cord back to its original position and glue the cut ends together. The glued together cut is covered with some dirt in order to disguise its presence. Since the TIR cord is often dirty (dirt is picked up during movement of the trailer) the glued together cut will often be overlooked by the driver of the vehicle. A driver of the vehicle will consequently bring the illegal immigrant across one or more borders, without knowing that the illegal immigrant is in the trailer.

It is an object of the present invention to provide a security system which overcomes or substantially mitigates the above problem.

According to the invention there is provided a vehicle security system for a vehicle cargo area provided with an conductor which passes around substantially all of the circumference of the cargo area, the security system comprising connection means for passing a signal through the conductor, and monitoring means for monitoring the signal, the monitoring means being arranged to ensure that the signal remains within one or more predetermined boundaries, and to raise an alarm if the signal moves outside of the one or more boundaries.

Suitably, the conductor is an electrical conductor and the signal is an electrical signal.

Suitably, the electrical conductor is a Transport International Routier (TIR) cord.

Suitably, the electrical signal is a constant voltage.

Suitably, the electrical signal is a time varying signal.

Suitably, the system further includes means for monitoring the time variance of the electrical signal, and thereby monitoring the length of the electrically conducting cable.

Suitably, the system includes an oscillator circuit formed by connecting the cable to a logic gate, the frequency or period of oscillation of the circuit being determined in part by the length of the cable, the one or more predetermined boundaries being one or more frequency or period values.

Suitably, at least one predetermined boundary is an upper voltage value.

Suitably, at least one predetermined boundary is a lower voltage value.

Suitably, a discontinuity is included in the TIR cord at the point at which the electrical signal is applied to the cord, the monitored signal being obtained from an opposite end of the cord.

Suitably, the discontinuity is located within a control box which also contains the connection means and the monitoring means, the control box being securable to the cargo area.

Suitably, a light sensitive detector is located within the control box and is arranged to activate the alarm upon unauthorised opening of the control box.

Suitably, the alarm includes an audible signal and/or lights.

Suitably, the system is provided with a display which indicates that the alarm has been activated.

Suitably, the system is provided with a display which indicates the time and date that the alarm was activated.

Suitably, the system is provided with a display which indicates the time and date that the alarm was last reset.

Suitably, the system is provided with a counter which counts the number of times that the alarm has been reset. This may be shown on the display.

Suitably, the display is located in a vehicle cab.

Suitably, the display is located on the cargo area.

The system may be provided with a transmitter which transmits an electromagnetic signal when the alarm is activated.

The signal may be a Global Messaging System (GMS) signal. The signal may be sent to a mobile telephone of a driver and/or to a control centre.

The signal may include information regarding the time and/or manner in which the alarm was activated.

Suitably, the system is provided with authorisation means which allows authorised resetting of the system. The authorisation means may comprise a keypad.

Suitably, the system is powered by a rechargeable batteries.

Suitably, ends of the TIR cord which are to be connected by a customs seal are electrically connected via a resistor.

Suitably, the resistor is located inside a box which is locked in a closed configuration when a customs seal is fitted.

Suitably, the box is provided with connectors arranged to receive corresponding connectors fitted to ends of the conductor, and the box is configured to prevent the connectors, and hence the ends of the conductor, being removed from the box when the box is locked in the closed configuration.

Suitably, the resistor is located in one half of a connector, and the connector includes electrical connection means for electrically connecting the resistor to an opposite half of the connector.

Suitably, the half of the connector in which the resistor is located is insulated from the conductor such that electricity passing through the conductor will pass through the resistor.

Suitably, the cargo area is provided with hooks onto which the conductor may be wound when it is not in use.

Suitably, one or more sensors are located in the cargo area, the one or more sensors being connected to the monitoring means.

Suitably, the sensors are connected in series with the resistor.

Suitably, a switch is located at a point where a curtain in a closed configuration presses against a structural element of the cargo area, the switch being connected to the monitoring means.

The system may be provided with a tracking device which monitors the location of the cargo area.

The alarm may be configured such that on activation of the alarm the location of the cargo area is transmitted.

Suitably, the cargo area is a trailer having an articulated connection.

Suitably, the cargo area and vehicle cab together comprise a single unit.

Suitably, the electrical conductor comprises a core of a Transport International Routier (TIR) cord, the core being insulated from an exterior of the TIR cord.

The conductor may be an ultrasonic conductor, and the signal an ultrasonic signal.

Suitably, the connection means comprises a transmitter arranged to transmit an ultrasonic pulse signal, and the monitoring means comprises a receiver arranged to receive the ultrasonic pulse signal.

Suitably, the transmitter and the receiver are located at opposite ends of the ultrasonic conductor.

Suitably, the predetermined boundary is the time taken for the ultrasonic pulse signal to travel to the receiver.

Suitably, an electrical connection is provided between the transmitter and the receiver to allow synchronisation signals to pass between the transmitter and the receiver.

Suitably, the transmitter and receiver are located at one end of the ultrasonic conductor, the receiver being arranged to detect a reflection of the ultrasonic pulse signal from a discontinuity in the ultrasonic conductor.

Suitably, the predetermined boundary is the time taken for the ultrasonic pulse signal to travel to the receiver.

Suitably, the ultrasonic pulse signal has a frequency of approximately 2MHz.

The conductor may be comprise an optical fibre, and the signal an optical signal.

Suitably, the optical fibre comprises a core of a Transport International Routier (TIR) cord.

Suitably, the transmission means comprises a light emitting diode arranged to couple light into the optical fibre.

Suitably, the monitoring means comprises a photodiode arranged to detect light transmitted from the optical fibre.

Suitably, the predetermined boundary is the intensity of the optical signal.

A specific embodiment of the invention will now be described by way of example only, with reference to the accompanying figures, in which:
Figure 1 is a photograph of a curtain-sider vehicle trailer to which the invention may be fitted;
Figure 2 is a photograph of a tilt vehicle trailer to which the invention may be fitted;
Figure 3 is a schematic illustration of a trailer to which the invention has been fitted;
Figure 4 is a circuit diagram which represents the system according to the invention;
Figure 5 is a schematic illustration of connectors which form part of the system;
Figure 6 is a circuit diagram of an oscillator which may form part of the system according to the invention; and
Figure 7 is a schematic illustration of connectors which may be used in place of the connectors shown in figure 5.

Referring to figure 1, a curtain-sider trailer comprises a trailer provided with a curtain which closes one side of the trailer, buckles being spaced along the trailer to allow the curtain to be secured in a closed configuration. An upper end of each buckle is attached to a metal strip approximately four inches wide which runs from the top of the trailer. Webbing extending from the bottom of the trailer is passed through a lower end of each buckle. The buckle is provided with a ratchet system which is used to draw the webbing through the buckle until the curtain as been firmly secured. The buckle is provided with openings through which a Transport International Routier (TIR) cord is passed, thereby fixing the buckle in a closed configuration and preventing the webbing from being released from the buckle.

Referring to figure 2, a tilt trailer is provided with panels around the edge of the trailer, the panels extending partway up the vertical height of the trailer. The panels are arranged to tilt downwards. A curtain extends from the top of the trailer and overlaps the panels, thereby enclosing the trailer. When the trailer is to be loaded, the curtain is pulled to one end of the trailer and the panels are hinged downwards to allow easy access to the trailer. Once loading has been completed, the panels are secured in the upright position and the curtain is extended along the trailer, thereby closing the side of the trailer. The curtain is provided with eyeholes which align with rings extending from the panels such that the eyeholes pass over the rings. A TIR cord is passed through the rings to secure the curtain and the panels in the closed configuration.

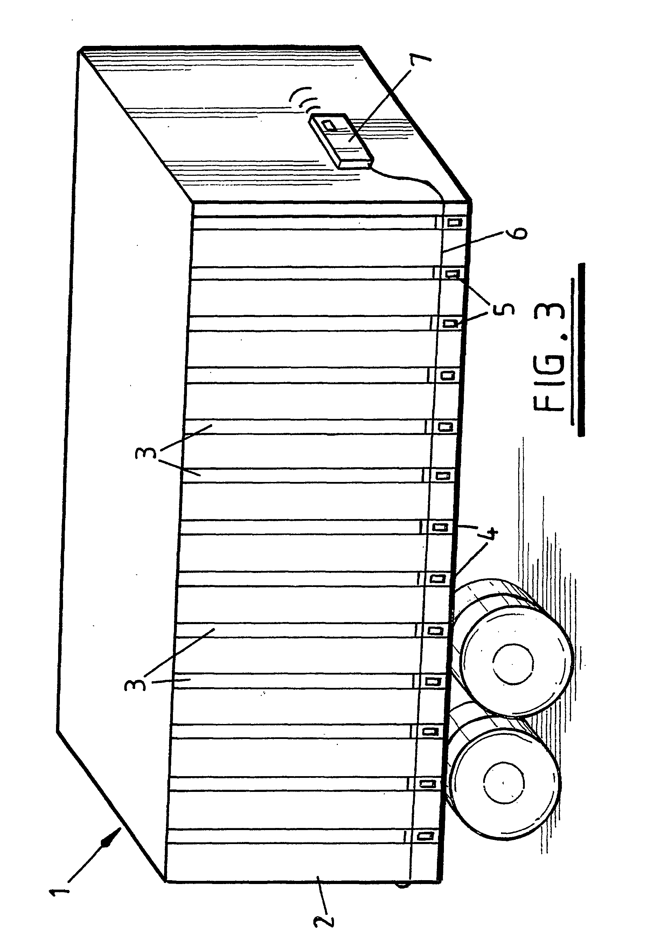

Referring to figure 3, a curtain-sider trailer 1 comprises a curtain 2, steel straps 3, webbing 4 and buckles 5. A TIR cord 6 is passed through the buckles 5 thereby securing the buckles 5 in the closed configuration. The TIR cord comprises a steel cable approximately one quarter of an inch in diameter which is covered with a plastic coating. A control box 7 is fixed to a front end of the trailer 1, and the TIR cord passes to the control box. The control box passes an electrical current through the TIR cord. The control box is powered by rechargeable batteries, and thus does not need to be connected to a tractor unit. A discontinuity of the TIR cord is included in the control box, so that the electrical current must pass around the circumference of the trailer. The control box monitors the voltage drop across the TIR cord. The control box is configured to sense changes of the voltage drop across the TIR cord, and when a change is detected the control box raises an alarm.

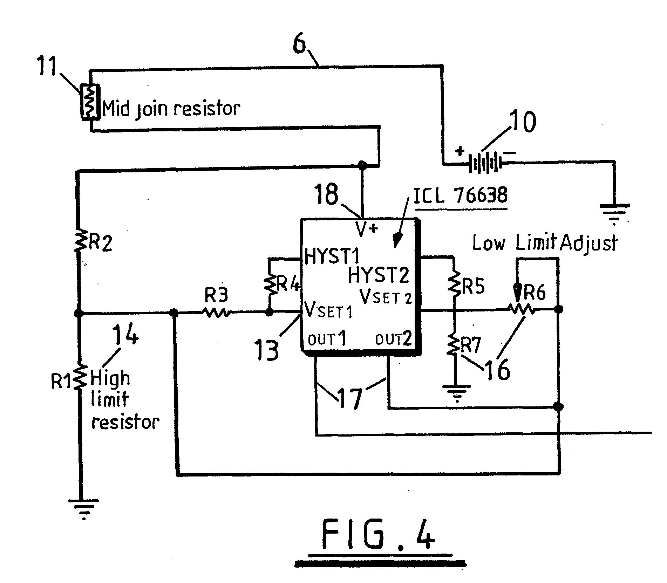

Figure 4 is a circuit diagram which shows in detail the embodiment of the invention. A voltage source 10 generates a voltage which is applied across the TIR cord. The voltage source 10 comprises rechargeable batteries located in the control box (7 in figure 3). The batteries ensure that the voltage is applied across the TIR cord 6 even when a tractor unit is not connected to the trailer 1. The current passes along one half of the TIR cord, through a resistor 11 located at the rear of the trailer, along the second half of the TIR cord, and passes to a sensing circuit. The sensing circuit is based upon an integrated chip ICL 7665S sold by Intersil under the name Micropower Over/Under voltage detector.

The chip is provided with a first voltage input 13 which determines the highest 'allowed' voltage, the voltage being set by resistors 14. The chip is provided with a second voltage input 15 which determines the 'allowed' lower voltage limit. This voltage is regulated by resistors 16. The voltage at the opposite end of the cord from the voltage source 10 is passed to the chip at a voltage input 18. Two outputs 17 pass from the chip. When the voltage at the voltage input 18 (i.e. the voltage drop across the TIR cord 6) passes outside of the high or low voltage limits then the output 17 changes, causing the alarm (not shown) to be activated. For example, if the TIR cord is cut, as is necessary in order to gain access to the trailer, then the voltage drop will increase to an open circuit value, and the output 17 will change causing the alarm (not shown) to be activated.

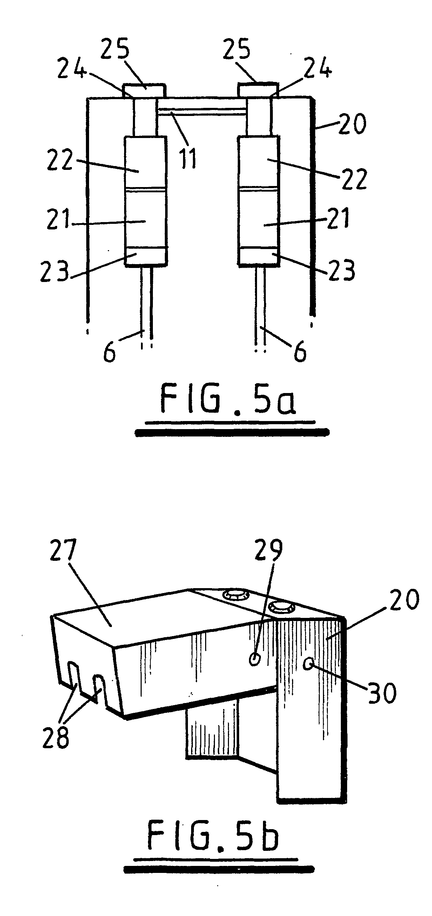

As previously described, the TIR cord comprises a steel cable approximately quarter of an inch in diameter which is covered with a plastic coating. It is conventional to connect ends of the TIR cord using a customs seal located at the rear of the trailer. The customs seal comprises a pair of metal legs which are securely fixed to the ends of the TIR cord and are connected together by a tamper proof metal seal bearing a customs number. The embodiment of the invention includes a modification of this arrangement, as shown in figure 5.

Figures 5a and 5b illustrate a box 20 which is securely mounted at the rear of the trailer, for example on a rear door of the trailer. For ease of illustration, a lid of the box 20 is not shown in figure 5a, and the contents of the box 20 are not shown in figure 5b. Referring to figure 5a, Each end of the TIR cord 6 is provided with a male connector 21 configured to be received by corresponding female connectors 22. The connectors are manufactured by Premier, Scotland (product code 203140, series 19). The male connectors 21 are connected to the ends of the TIR cord 6 by tail ends 23a, 23b (Premier, product code 203149). The tail ends 23 provide strong connections, so that the TIR cord 6 cannot be pulled from the connectors 21. The female connectors 22 are fixed to the box 20 by passing their upper ends through openings 24 in the box. The female connectors 22 are secured to the box 20 using blank caps 25 (Premier, product code 203057). Upper ends of the female connectors 22 are connected together by a resistor 11. The resistor 11 provides a known and constant voltage drop.

Referring to figures 5a and 5b, the box 20 is provided with a hinged lid 27. The lid is opened in order to secure the TIR cord using the male and female connectors. Once this has been done the lid is closed. A lowermost end of the lid 27 is provided with two slots 28 which are sufficiently wide to receive the TIR cord 6, but are sufficiently narrow that the male connectors 21 cannot be pulled from the box 20 when the lid 27 is closed.

Side panels of the lid are provided with holes 29, positioned to correspond with holes 30 in the box 20 when the lid 27 is in the closed position. Once the TIR cord 6 has been secured inside the box, the lid 27 is closed and a customs seal (not shown) is passed through the holes 29, 30. The customs seal holds the lid 27 in the closed configuration, so that the lid 27 cannot be opened unless the customs seal is broken. The box 20 thus provides a secure means of passing the electric current between ends 6 of the TIR cord, which cannot be tampered with without breaking the customs seal.

The electric current in the TIR cord passes from one end of the TIR cord 6 via a male connector 21 to a female connector 22, and then via the resistor 11 to the other female connector 22, male connector 21 and into the TIR cord 6. The box 20 and the blank caps 25 are electrically insulated so that they do not conduct the electric current.

Referring again to figure 3, the TIR cord 6 passes around the circumference of the trailer 1, the ends of the cord being located at the rear of the trailer. Since the control box 7 monitors the voltage drop across the cord, it is clear that a discontinuity of the cord must be included within the control box. Therefore, the TIR cord used by the invention is broken into two halves, each of which is securely connected to the control box 7. Suitably spaced pairs of hooks (not shown) may be located at the front end of the trailer, the pairs of hooks being used to stow the cord when the cord is not being used.

The alarm may include a siren and/or flashing lights. The siren may for example be a 120 decibel sounder situated in a suitable place on the trailer. The sounder may be located within the trailer to prevent unauthorised access to the siren. The control box may be provided with a transmitter arranged to transmit a signal to a portable device if the alarm is activated. The portable device is carried by the driver of the vehicle, thereby alerting him immediately if the alarm is activated. Alternatively, the control box may be provided with a global system for mobile communication (GSM) transmitter arranged to transmit a notification signal to a mobile phone carried by the driver and/or to an operations centre which may for example be a transport or operation manager's office. The notification signal may include a text message (SMS) indicating details of the alarm activation, for example the time at which the alann was activated.

The alarm may be connected to a tracking device, for example a device which uses GPS, which will indicate the location of the truck/trailer if the alarm is triggered, using a suitable software package such as AutoRoute express. A suitable tracking device is sold by Temple of Rotherham, England. Where a tracking device is used, the notification message may include the location of the trailer. The notification message may be periodically updated if the trailer is moving. The tracking device may be monitored using a PC running a map program, which will indicate on a map the location of the trailer.

The control box may include a keypad, to allow a driver to arm and disarm the alarm by entering a code. The code required for activation may be set during assembly of the system, each system being given a different code. Altematively, the control box may be arranged to receive a signal from a hand held transmitter operated by the driver (for example of the type used to control car central locking), or to receive a signal from a passive hand held device arranged to receive a signal from the control box and retransmit the signal at a different frequency. The alarm may be configured so that it is set automatically when the TIR cord connectors 21a, 21b are in place. The control box may be provided with a GMS receiver to allow the alarm to be controlled remotely, for example from a PC.

The control box 7 is provided with a display (not shown in figure 3) which indicates the status of the system. If the alarm has been activated, then the display will show a suitable message. If the alarm has not been activated then the display may be blank.

The control box may include a counter which increments each time the circuit formed by the TIR cord is broken, and each time the circuit is reconnected. This is useful for example in a situation in which several journeys are to take place before returning to an operations centre. The operations manager can determine from the counter the number of times that the TIR cord connectors 21 a, 21b have been disconnected from the box 20. This will indicate the number of times the cargo of the truck has been accessed. The number held by the counter may be indicated on the display. The control box may include a clock and a memory, arranged such that each time the cord connectors 21a, 21b are disconnected from the box 20 the time and date is recorded in the memory. This information may be shown on the display. By checking the display against the CMR loading details, customs officials can see whether the system has been reset since loading took place. If the system was reset some time after loading took place, this will alert the customs officials that the alarm has been activated whereupon they may search the trailer. If drugs are detected on the trailer and the display indicates that the system was last reset immediately after loading, then this will indicate that the drugs have come from the point of loading. If on the other hand the display indicates that the system has been reset and has a different date/time, then any drugs found on the trailer are likely to have been put in the trailer after loading. The driver will then need to explain why the system was reset, since the reset indicates that the driver gained access to the trailer.

In addition to the display unit located on the control box, a display unit may be located in the tractor cab. The display unit corresponds to the display unit located on the control box, and receives information transmitted by radio frequency from the control box. The control box may be connected to the cab display unit by wiring which passes from the trailer to the tractor cab. The wiring may be an electrical cable 8 known as a Susie. The wiring may provide recharge current to the batteries 10.

In addition to monitoring the voltage drop across the TIR cord, the security system may use other detection means, as described below. The notification signal sent by GMS, described above, may indicate which of the detection means activated the alarm.

A light sensitive detector may be provided within the control box 7, to detect any unauthorised opening of the control box. The light sensitive detector is connected to the alarm.

A motion detector may be connected to the system. The motion sensor may be armed by the driver keying a code into the keypad when the trailer is parked. Where a tracking system has been fitted to the trailer, as described above, the tracking system is configured to activate when the motion system activates the alarm.

Infra-red sensors may be located in opposite corners of the trailer, the sensors being connected to a monitoring circuit and arranged to detect heat emitted by an illegal immigrant. The monitoring circuit activates the alarm described above when a heat pattern is detected. Referring to figure 4, the sensors may be connected in series with the resistor. Other suitable forms of sensors may be used.

The security system may include one or more micro-switches installed at locations where the curtain is in contact with the trailer when in the closed configuration (for example either end of the curtain). The micro-switches are connected to a monitoring circuit arranged to activate the alarm described above, in the event that a micro-switch is actuated. When the curtains are closed the micro-switches are closed, and conduct an electrical signal. If one or more of the switches is opened, for example due to the curtain being opened, this will interrupt the electrical signal and will activate the alarm.

It will be appreciated that the security system detects any unauthorised cutting of the TIR cord, and as such is not limited to the detection of illegal immigrants. The security system will detect any cutting of the TIR cord for any the purpose, for example in order to place unauthorised goods in a trailer (e.g. drugs), or to steal goods from the trailer.

The preferred embodiment of the invention passes an electrical signal around the TIR cord. In other embodiments of the invention any other suitable electrical conductor may be used to carry the electrical signal around the trailer, for example a coaxial cable wound around the TIR cord, or a coaxial cable held within the TIR cord. The TIR cord is preferred because it is extremely robust and is relatively inexpensive to produce.

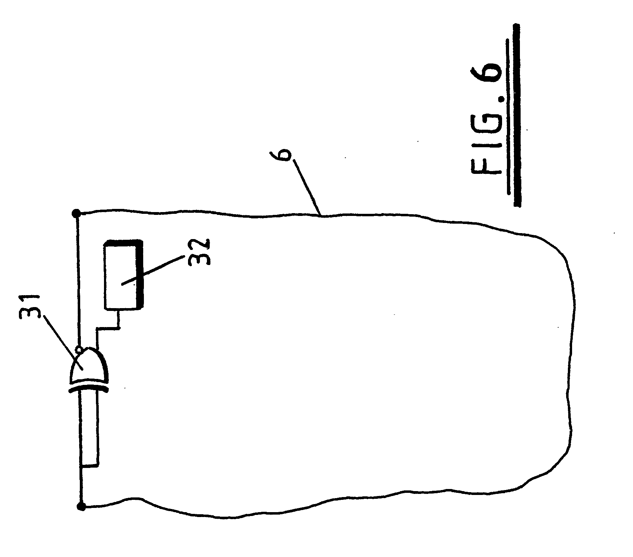

The system may include means for monitoring the length of the TIR cord. A preferred length monitoring circuit is shown in figure 6. The circuit comprises a NOR gate 31 which is connected to the TIR cord 6 to form a simple ring oscillator. The delay from the TIR cord and the gate determine the ring oscillator's frequency. For example, a 100m cable would give approximately a 600MHz oscillation frequency. A second output of the gate is connected to a frequency counter 32 which measures the oscillation frequency.

The gate's delay is the sum of its high-to-low and low-to-high transition times, t_{PHL} and t_{PLH}. Using the period of the ring oscillator, T=1/f_{osc}, the length of the cord L is L=(T/2-(t_{PHL}+t_{PLH}))xv where v is the propagation velocity of the cord. In the case of coaxial cable, v=1/CZₒ, where C is the capacitance per unit length and Zₒ is the cable's characteristic impedance. The setup accurately measures small changes of the length of a coaxial cable to better than 4% of the length of an added length of cable (i.e. accurate to 0.025% of the cable's total length).

Typically, the circuit will be constructed using a 35m length of TIR cord. The accuracy of the circuit in this situation has not been measured, but is expected to be sufficient to determine whether a bypass has been added to the cord.

Other suitable length monitoring circuits may be used, for example a pulse generator and a clock which measures the time taken for pulses to propagate around the cord.

The length monitoring circuit may be provided in tandem with the DC level monitoring circuit described further above, each generated signal being unaffected by the other. The length monitoring circuit may be used independently of the DC level monitoring circuit. For example the absence of a signal at a frequency counter (i.e. when the cord is cut) may cause the alarm to be raised, or a signal whose amplitude increases (i.e. the resistor 11 at the back of the trailer has been bypassed) may cause the alarm to be raised.

As mentioned previously, the TIR cord conventionally comprises a cable of approximately one quarter inch diameter threaded steel with a plastic coating. The TIR cord used by the invention may be specially manufactured with a central conductor contained in an insulating cladding. The electrical signal may be passed through the central conductor, making it more difficult to attempt to bypass the conductor. The central conductor may be for example multi-stranded copper cable (diameter 1mm-1.5mm) in an insulating cladding, which forms a central core around which the steel of the TIR cord is woven. Any other suitable material may be used to form the central conductor (for example steel).

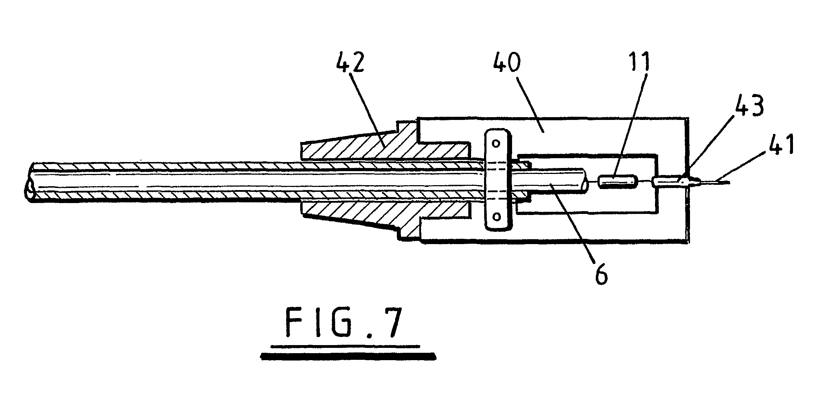

The system may be provided with alternative means for connecting ends of the TIR cord at the back of the trailer, as shown in figure 7. A male connector is connected to a left hand end of the TIR cord, and a corresponding female connector is connected to the right hand end of the TIR cord (the male connector is shown in figure 5). The connectors are arranged to connect the cord together such that the resistor provides an electrical connection between ends of the cord. The resistor 11 is held inside the male connector 40, and is soldered to the TIR cord 6 at one end and to a connector pin 41 at the other end. An insulator 43 insulates the pin 41 and resistor 11 from the male connector. The connector pin 41 passes into a socket which receives the pin and is electrically connected to the right hand end of the TIR cord. To ensure that the resistor is not damaged by vibration of the vehicle during transit, the space inside the male connector is filled with room temperature vulcanising (RTV) rubber or epoxy.

The male connector 40 is fixed to the TIR cord using a connector clamp 42 which is clamped on top of the TIR cord outside of the plastic coating of the cord thereby avoiding electrical contact. This means that the resistor 11 provides the only electrical connection from the left hand end of the cord to the right hand end of the cord. The female connector is connected to the right end of the cord by a clamp. The plastic coating of the right hand end of the TIR cord is trimmed back so that the clamp fastens directly onto the steel of the cord, thereby providing an electrical connection from the pin 41 to the right hand end of the cord.

Any attempt to remove the customs seal and maintain the TIR cord circuit using for example a jump lead or a cord extension will bypass the mid-join resistor, and the voltage drop seen at the control box will reduce to approximately zero. This voltage drop falls outside of the allowed voltage range, and the alarm will be activated.

In an alternative embodiment of the invention (not illustrated) a fibre-optic cable is located in the centre of the TIR cord during manufacture of the cord. A light emitting diode (LED) provided in a control box is arranged to couple light into one end of the fibre-optic cable (the cord and control box are arranged in the manner shown in figure 3). The light propagates along the fibre-optic cable to a polycarbonate joint which bridges an interruption of the fibre-optic cable at the customs seal. The light passes through the polycarbonate joint, and along the remainder of the fibre-optic cable to an opposite end which is also located in the control box. A photodiode is arranged to detect light emitted from the end of the fibre-optic cable. If the TIR cord is interfered with in any way then the light detected by the photodiode will be affected, and the photodiode will raise the alarm (in the same manner as described above for the other embodiments).

The fibre-optic cable is fed into TIR cord as the core of the TIR cord during manufacture of the cord.

In a further alternative embodiment of the invention, an ultrasonic signal is passed along the TIR cord. An ultrasonic transmitter is located a control box and periodically generates an ultrasound pulse having a frequency of about 2MHz which is coupled to the TIR cord (the cord and control box are arranged in the manner shown in figure 3). A connector is provided to carry the pulse across the discontinuity in the TIR cord at the customs seal. The pulse continues along the TIR cord to an ultrasonic receiver located in the control box. Ultrasound travels at around 5000m/s in a thin steel cord or rod, so the receiver will expect to receive the ultrasound pulse about 20ms after it was transmitted. An electrical synchronisation signal is sent in the control box from the transmitter to the receiver, so that the receiver knows when the ultrasound pulse was transmitted. An interruption of the ultrasound signal will indicate that the TIR cord has been cut, whereupon the alarm is raised.

In a modified arrangement of the ultrasound embodiment of the invention, an ultrasound transmitter/receiver is provided at one end of the TIR cord. A connector is not provided at the customs seal, and consequently an ultrasound pulse transmitted by the transmitter/receiver will be reflected and will return to the transmitter/receiver as an echo. The echo will return to the transmitter/receiver approximately 20ms after transmission. Any reduction of this time will indicate that the TIR cord has been cut, whereupon the alarm is raised. A second ultrasound transmitter/receiver is provided to transmit/receive ultra sound pulses on the other side of the TIR cord.

The logic of operation of one embodiment of the system is set out below:

### Status, and Steps taken during

### loading

Trailer open, doors & curtains
Trailer loaded & secure
Install TIR cord & secure
Check tension on TIR cord
Set System
Check system operation by
breaking TIR circuit
Reset System
Check reset date/time
Check power/battery condition light
Trailer secure
Driver checks that CMR date/time
stamp corresponds with system
date/time stamp.

| | |
|---|---|
| **Scenario 1 - Attempted break in by cutting TIR cord** | |
| | As TIR cord is cut the circuit is broken and the voltage increases to max Voltage sensor detects high voltage, and activates alarm Red LED lights Audible alarm sounds on trailer & on remote Driver investigates & resets |
| **Scenario 2 - Attempted break in at rear door** | |
| | |
| | Custom seal broken, TIR plug disconnected and voltage rises to max Voltage sensor fires high level alarm Red LED lights Audible alarm sounds on trailer & on remote Driver investigates & resets |
| **Scenario 3 - Interference with TIR cord custom/seal at rear of trailer** | |
| | Custom seal bypassed electrically by installing a jumper across the TIR plug Voltage falls to zero Voltage sensor fires low level alarm Yellow LED lights Audible alarm sounds on trailer & on remote Driver investigates & resets |
| **Scenario 4 - Attempt to bypass section of TIR cord** | |
| | As bypass cable is connected the cable length increases The length increase is detected by the length monitoring circuit, and the alarm is activated Red LED lights Audible alarm sounds on trailer & on remote Driver investigates & resets |

## Claims

1. A vehicle security system for a vehicle cargo area provided with a conductor which passes around substantially all of the circumference of the cargo area, the security system comprising connection means for passing a signal through the conductor, and monitoring means for monitoring the signal, the monitoring means being arranged to ensure that the signal remains within one or more predetermined boundaries, and to activate an alarm if the signal moves outside of the one or more boundaries, wherein the conductor is a Transport International Routier (TIR) cord.

2. A vehicle security system according to claim 1, wherein the conductor is an electrical conductor, and the signal is an electrical signal.

3. A system according to claim 1 or claim 2, wherein the electrical signal is a time varying signal and the system further includes means for monitoring the time variance of the electrical signal, and thereby monitoring the length of the electrically conducting cable.

4. A system according to claim 3, wherein the system includes an oscillator circuit formed by connecting the cable to a logic gate, the frequency or period of oscillation of the circuit being determined in part by the length of the cable, the one or more predetermined boundaries being one or more frequency or period values.

5. A system according to claim 2, wherein the electrical signal is a constant voltage.

6. A system according to any preceding claim, wherein at least one predetermined boundary is an upper voltage value.

7. A system according to any preceding claim, wherein at least one predetermined boundary is a lower voltage value.

8. A system according to any preceding claim, wherein a discontinuity is included in the TIR cord at the point at which the signal is applied to the cord, the monitored signal being obtained from an opposite end of the cord.

9. A system according to claim 8, wherein the discontinuity is located within a control box which also contains the connection means and the monitoring means, the control box being securable to the cargo area.

10. A system according to claim 9, wherein a light sensitive detector is located within the control box and is arranged to activate the alarm upon unauthorised opening of the control box.

11. A system according to any preceding claim, wherein the alarm includes an audible signal and/or lights.

12. A system according to any preceding claim, wherein the system is provided with a display which indicates that the alarm has been activated.

13. A system according to any preceding claim, wherein the system is provided with a display which indicates the time and date that the alarm was activated.

14. A system according to any preceding claim, wherein the system is provided with a display which indicates the time and date that the alarm was last reset.

15. A system according to any of claims 12 to 14, wherein the system is provided with a counter which counts the number of times that the alarm has been reset.

16. A system according to claim 15, wherein the display indicates the number of times that the alarm has been reset.

17. A system according to any of claims 12 to 15, wherein the display is located in a vehicle cab.

18. A system according to any of claims 12 to 15, wherein the display is located on the cargo area.

19. A system according to any preceding claim, wherein the system is provided with a transmitter which transmits an electromagnetic signal when the alarm is activated.

20. A system according to claim 19, wherein the signal is a Global Messaging System (GMS) signal.

21. A system according to claim 20, wherein the signal is sent to a mobile telephone of a driver and/or to a control centre.

22. A system according to any of claims 19 to 21, wherein the signal includes information regarding the time and/or manner in which the alarm was activated.

23. A system according to any preceding claim, wherein the system is provided with authorisation means which allows authorised resetting of the system.

24. A system according to claim 23, wherein the authorisation system comprises a keypad.

25. A system according to any preceding claim, wherein the system is powered by rechargeable batteries.

26. A system according to any preceding claim, wherein ends of the conductor located at the rear of the cargo area are electrically connected via a resistor.

27. A system according to claim 26, wherein the resistor is located inside a box which is locked in a closed configuration when a customs seal is fitted.

28. A system according to claim 27, wherein the box is provided with connectors arranged to receive corresponding connectors fitted to ends of the conductor, and the box is configured to prevent the connectors, and hence the ends of the conductor, being removed from the box when the box is locked in the closed configuration.

29. A system according to claim 26, wherein the resistor is located in one half of a connector, and the connector includes electrical connection means for electrically connecting the resistor to an opposite half of the connector.

30. A system according to claim 29, wherein the half of the connector in which the resistor is located is insulated from the conductor such that electricity passing through the conductor will pass through the resistor.

31. A system according to any preceding claim, wherein the cargo area is provided with hooks onto which the conductor may be wound when it is not in use.

32. A system according to any preceding claim, wherein one or-more sensors are located in the cargo area, the one or more sensors being connected to the monitoring means.

33. A system according to claim 32 and any of claims 26 to 30, wherein the sensors are connected in series with the resistor.

34. A system according to any preceding claim, wherein a switch is located at a point where a curtain in a closed configuration presses against a structural element of the cargo area, the switch being connected to the monitoring means.

35. A system according to any preceding claim, wherein the system is provided with a tracking device which monitors the location of the cargo area.

36. A system according to claim 35, wherein the alarm is configured such that on activation of the alarm the location of the cargo area is transmitted.

37. A system according to any preceding claim, wherein the cargo area is a trailer having an articulated connection.

38. A system according to any of claims 1 to 36, wherein the cargo area and vehicle cab together comprise a single unit.

39. A system according to any preceding claim, wherein the electrical conductor comprises a core of a Transport International Routier (TIR) cord, the core being insulated from an exterior of the TIR cord.

40. A vehicle security system according to claim 1, wherein the conductor is an ultrasonic conductor and the signal is an ultrasonic signal.

41. A vehicle security system according to claim 40, wherein the connection means comprises a transmitter arranged to transmit an ultrasonic pulse signal, and the monitoring means comprises a receiver arranged to receive the ultrasonic pulse signal.

42. A vehicle security system according to claim 41, wherein the transmitter and the receiver are located at opposite ends of the ultrasonic conductor.

43. A vehicle security system according to claim 42, wherein the predetermined boundary is the time taken for the ultrasonic pulse signal to travel to the receiver.

44. A vehicle security system according to claim 43, wherein an electrical connection is provided between the transmitter and the receiver to allow synchronisation signals to pass between the transmitter and the receiver.

45. A vehicle security system according to claim 42, wherein the transmitter and receiver are located at one end of the ultrasonic conductor, the receiver being arranged to detect a reflection of the ultrasonic pulse signal from a discontinuity in the ultrasonic conductor.

46. A vehicle security system according to claim 45, wherein the predetermined boundary is the time taken for the ultrasonic pulse signal to travel to the receiver.

47. A vehicle security system according to any of claims 41 to 46, wherein the ultrasonic pulse signal has a frequency of approximately 2MHz.

48. A vehicle security system according to claim 1, wherein the conductor comprises an optical fibre, and the signal comprises an optical signal which propagates along the optical fibre.

49. A vehicle security system according to claim 48, wherein the optical fibre comprises a core of a Transport International Routier (TIR) cord.

50. A vehicle security system according to claim 48 or claim 49, wherein the transmission means comprises a light emitting diode arranged to couple light into the optical fibre.

51. A vehicle security system according to any of claims 48 to 50, wherein the monitoring means comprises a photodiode arranged to detect light transmitted from the optical fibre.

52. A vehicle security system according to any of claims 48 to 51, wherein the predetermined boundary is the intensity of the optical signal.

53. A vehicle security system according to any preceding claim, wherein the system is provided with activation means comprising a hand held transmitter.

## Patentansprüche

1. Ein Fahrzeugsicherheitssystem fiir einen Fahrzeugladeraum, wobei ein Leiter angebracht ist, der im wesentlichen um den gesamten Umfang des Laderaums herumreicht und wobei besagtes Sicherheitssystem Verbindungseinrichtungen enthält, um ein Signal durch den Leiter zu schicken, und ferner ein Überwachungssystem zur Signalüberwachung, wobei das Überwachungssystem so angelegt ist, dass sichergestellt ist, dass das Signal innerhalb einer oder mehrerer vorbestimmter Grenzen verbleibt, und dass eine Warnmeldung aktiviert wird, falls das Signal eine oder mehrere Grenzen überschreitet, wobei der Leiter aus einer TIR-Schnur (Transport International Routier) besteht.

2. Ein Fahrzeugsicherheitssystem gemäß Anspruch 1, wobei der Leiter ein elektrischer Leiter und das Signal ein elektrisches Signal ist.

3. Ein System gemäß Anspruch 1 oder Anspruch 2, wobei das elektrische Signal ein zeitveränderliches Signal ist und das System darüber hinaus Hilfsmittel zur Überwachung der zeitlichen Veränderung des elektrischen Signals enthält und **dadurch** die Länge des elektrisch leitenden Kabels überwacht.

4. Ein System gemäß Anspruch 3, wobei das System einen Schwingkreis enthält, der **dadurch** gebildet wird, dass man das Kabel mit einer logischen Torschaltung verbindet, wobei die Schwingungsfrequenz oder die Schwingungsperiode des Schaltkreises teilweise durch die Länge des Kabels bestimmt wird und wobei der eine vorbestimmte Grenzwert oder die mehreren vorbestimmten Grenzwerte aus einem oder mehreren Frequenzwerten oder Periodenwerten bestehen.

5. Ein System gemäß Anspruch 2, wobei das elektrische Signal aus einer konstanten Spannung besteht.

6. Ein System gemäß irgendeinem der vorausgegangenen Ansprüche, bei dem mindestens ein vorbestimmter Grenzwert aus einem oberen Spannungswert besteht.

7. Ein System gemäß irgendeinem der vorausgegangenen Ansprüche, bei dem mindestens ein vorbestimmter Grenzwert aus einem unteren Spannungswert besteht.

8. Ein System gemäß irgendeinem der vorausgegangenen Ansprüche, bei dem die TIR-Schnur an der Stelle eine Unstetigkeitsstelle enthält, an der das Signal auf die Schnur aufgegeben wird, wobei das überwachte Signal von einem gegenüberliegenden Ende der Schnur kommt.

9. Ein System gemäß Anspruch 8, wobei die Unstetigkeitsstelle innerhalb einer Steuerbox liegt, die auch die Verbindungseinrichtung und die Überwachungseinrichtung enthält, wobei besagte Steuerbox im Ladebereich sicher befestigt werden kann.

10. Ein System gemäß Anspruch 9, wobei sich innerhalb der Steuerbox ein lichtempfindlicher Sensor befindet, der so eingerichtet ist, dass er die Warnmeldung aktiviert, sobald die Steuerbox in nicht autorisierter Weise geöffnet wurde.

11. Ein System gemäß irgendeinem der vorausgegangenen Ansprüche, bei dem die Warnmeldung ein akustisches Signal und/oder Lichter enthält.

12. Ein System gemäß irgendeinem der vorausgegangenen Ansprüche, bei dem das System eine Anzeige enthält, die anzeigt, dass die Warnmeldung aktiviert wurde.

13. Ein System gemäß irgendeinem der vorausgegangenen Ansprüche, wobei das System eine Anzeige enthält, welche die Uhrzeit und das Datum der erfolgten Aktivierung der Warnmeldung angibt.

14. Ein System gemäß irgendeinem der vorausgegangenen Ansprüche, bei dem das System eine Anzeige enthält, welche die Uhrzeit und das Datum der letzten Rückstellung der Warnmeldung angibt.

15. Ein System gemäß irgendeinem der Ansprüche 12 bis 14, bei dem das System mit einem Zähler ausgestattet ist, der die Anzahl der erfolgten Rückstellungen von Warnmeldungen zählt.

16. Ein System gemäß Anspruch 15, bei dem die Anzeige die Anzahl der erfolgten Rückstellungen von Warnmeldungen angibt.

17. Ein System gemäß irgendeinem der Ansprüche 12 bis 15, bei dem sich die Anzeige im Fahrerhaus des Fahrzeugs befindet.

18. Ein System gemäß irgendeinem der Ansprüche 12 bis 15, bei dem sich die Anzeige auf dem Ladebereich befindet.

19. Ein System gemäß irgendeinem der vorausgegangenen Ansprüche, bei dem das System mit einem Übertragungsgerät ausgestattet ist, das ein elektromagnetisches Signal überträgt, sobald die Warruneldung aktiviert wird.

20. Ein System gemäß Anspruch 19, bei dem das Signal ein GMS-Signal (Global Messaging System) ist.

21. Ein System gemäß Anspruch 20, wobei das Signal zu einem Mobiltelefon eines Fahrers und/oder zu einem Kontrollzentrum geschickt wird.

22. Ein System gemäß irgendeinem der Ansprüche 19 bis 21, wobei das Signal Informationen über die Uhrzeit und/oder die Art und Weise der Aktivierung der Warnmeldung enthält.

23. Ein System gemäß irgendeinem der vorausgegangenen Ansprüche, wobei das System mit einer Freigabeeinrichtung ausgerüstet ist, welche die Autorisierung zur Rückstellung des Systems ermöglicht.

24. Ein System gemäß Anspruch 23, bei dem zum Autorisierungssystem eine Tastatur gehört.

25. Ein System gemäß irgendeinem der vorausgegangenen Ansprüche, bei dem das System mit Hilfe von wiederaufladbaren Batterien mit Energie versorgt wird;

26. Ein System gemäß irgendeinem der vorausgegangenen Ansprüche, bei dem die am hinteren Ende des Ladebereichs angebrachten Enden des Leiters über einen Widerstand elektrisch verbunden sind.

27. Ein System gemäß Anspruch 26, bei dem sich der Widerstand in einer Box befindet, die innerhalb einer geschlossenen Anordnung verschlossen ist, wenn eine Zollplombe angebracht wird.

28. Ein System gemäß Anspruch 27, bei dem die Box mit Steckverbindungen so ausgestattet ist, dass sie entsprechende Stecker, die sich an den Enden des Leiters befinden aufnehmen kann, und wobei die Box so ausgelegt ist, dass sie verhindert, dass die Stecker und somit die Enden des Leiters aus der Box herausgezogen werden können, wenn die Box in der geschlossenen Anordnung verschlossen ist.

29. Ein System gemäß Anspruch 26, wobei sich der Widerstand in einer Hälfte einer Steckverbindung befindet, die eine elektrische Verbindungseinrichtung zum elektrischen Verbinden des Widerstandes mit einer anderen, gegenüberliegenden Hälfte der Steckverbindung enthält.

30. Ein System gemäß Anspruch 29, bei dem die Hälfte der Steckverbindung, in der sich der Widerstand befindet vom Leiter so isoliert ist, dass der durch den Leiter fließende Strom durch den Widerstand fließt.

31. Ein System gemäß irgendeinem der vorausgegangenen Ansprüche, bei dem der Ladebereich mit Haken ausgerüstet ist, um die der Leiter herumgewickelt werden kann, wenn er nicht in Gebrauch ist.

32. Ein System gemäß irgendeinem der vorausgegangenen Ansprüche, bei dem sich einer oder mehrere Sensoren im Ladebereich befinden, wobei der eine Sensor oder die mehreren Sensoren mit der Überwachungseinrichtung verbunden sind.

33. Ein System gemäß Anspruch 32 und gemäß irgendeinem der Ansprüche 26 bis 30, bei dem die Sensoren mit dem Widerstand in Reihenschaltung verbunden sind.

34. Ein System gemäß irgendeinem der vorausgegangenen Ansprüche, bei dem sich ein Schalter an einer Stelle befindet, an der eine Plane in geschlossener Anordnung gegen ein Strukturelement im Ladebereich drückt, wobei der Schalter mit der Überwachungseinrichtung verbunden ist.

35. Ein System gemäß irgendeinem der vorausgegangenen Ansprüche, wobei das System mit einem Nachverfolgungsgerät ausgerüstet ist, das die Ortslage des Ladebereichs überwacht.

36. Ein System gemäß Anspruch 35, bei dem eine Warnmeldeeinrichtung so ausgelegt ist, dass die Ortslage des Ladebereichs aufgrund der Aktivierung der Warnmeldeeinrichtung übertragen wird.

37. Ein System gemäß irgendeinem der vorausgegangenen Ansprüche, bei dem der Ladebereich ein Anhänger mit einer Gelenkverbindung ist.

38. Ein System gemäß irgendeinem der Ansprüche 1 bis 36, bei dem der Ladebereich und das Fahrerhaus des Fahrzeugs zusammen eine einzige Einheit bilden.

39. Ein System gemäß irgendeinem der vorausgegangenen Ansprüche, wobei der elektrische Leiter einen Kern aus einer TIR-Schnur (Transport International Routier) beinhaltet, wobei der Kern vom Außenbereich der TIR-Schnur isoliert ist.

40. Ein Fahrzeugsicherheitssystem gemäß Anspruch 1, wobei der Leiter ein Ultraschall-Leiter und das Signal ein Ultraschall-Signal ist.

41. Ein Fahrzeugsicherheitssystem gemäß Anspruch 40, bei dem die Steckverbindung ein Übertragungsgerät enthält, das so ausgelegt ist, dass es ein pulsierendes Ultraschallsignal überträgt und bei dem die Überwachungseinrichtung einen Empfänger enthält, der zum Empfangen des pulsierenden Ultraschallsignals ausgelegt ist.

42. Ein Fahrzeugsicherheitssystem gemäß Anspruch 41, bei dem sich das Übertragungsgerät und der Empfänger an gegenüberliegenden Enden des Ultraschall-Leiters befmden.

43. Ein Fahrzeugsicherheitssystem gemäß Anspruch 42, bei dem die vorbestimmte Grenze die Zeit ist, welche das pulsierende Ultraschallsignal benötigt, um bis zum Empfänger zu gelangen.

44. Ein Fahrzeugsicherheitssystem gemäß Anspruch 43, bei dem eine elektrische Verbindung zwischen dem Übertragungsgerät und dem Empfänger eingerichtet ist, um die Übertragung von Synchronisationssignalen zwischen Übertragungsgerät und Empfänger zu ermöglichen.

45. Ein Fahrzeugsicherheitssystem gemäß Anspruch 42, bei dem sich das Übertragtmgsgerät und der Empfänger an einem Ende des Ultraschall-Leiters befinden, wobei der Empfänger so ausgelegt ist, dass er eine Reflexion des pulsierenden Ultraschallsignals von einer Unstetigkeitsstelle im Ultraschall-Leiter erfasst.

46. Ein Fahrzeugsicherheitssystem gemäß Anspruch 45, bei dem die vorbestimmte Grenze die Zeit ist, welche das pulsierende Ultraschallsignal benötigt, um bis zum Empfänger zu gelangen.

47. Ein Fahrzeugsicherheitssystem gemäß irgendeinem der Ansprüche 41 bis 46, wobei das pulsierende Ultraschallsignal eine Frequenz von etwa 2 MHz besitzt.

48. Ein Fahrzeugsicherheitssystem gemäß Anspruch 1, bei dem der Leiter aus einer optischen Faser und das Signal aus einem optischen Signal besteht, das sich entlang der optischen Faser ausbreitet.

49. Ein Fahrzeugsicherheitssystem gemäß Anspruch 48, bei dem die optische Faser einen Kern aus einer TIR-Schnur enthält.

50. Ein Fahrzeugsicherheitssystem gemäß Anspruch 48 oder 49, bei dem das Übertragungsgerät eine Leuchtdiode enthält, die so ausgelegt ist, dass sie Licht auf die optische Faser aufschaltet.

51. Ein Fahrzeugsicherheitssystem gemäß irgendeinem der Ansprüche 48 bis 50, bei dem das Überwachungsgerät eine Photodiode enthält, die so ausgelegt ist, dass sie das von der optischen Faser übertragene Licht erfasst.

52. Ein Fahrzeugsicherheitssystem gemäß irgendeinem der Ansprüche 48 bis 51, bei dem die vorbestimmte Grenze die Intensität des optischen Signals ist.

53. Ein Fahrzeugsicherheitssystem gemäß irgendeinem der vorausgegangenen Ansprüche, das mit einer Aktivierungseinrichtung ausgestattet ist, die ein Übertragungsgerät zur Handbedienung enthält.

## Revendications

1. Système de sécurité de véhicule pour une zone de chargement de véhicule comportant un conducteur entourant pratiquement l'ensemble de la circonférence de la zone de chargement, le système de sécurité comprenant un moyen de connexion pour transmettre un signal par l'intermédiaire du conducteur, et un moyen de surveillance pour surveiller le signal, le moyen de surveillance étant destiné à assurer le maintien du signal dans le cadre d'une ou de plusieurs limites prédéterminées et à actionner une alarme lorsque le signal se déplace hors de l'une ou des plusieurs limites, le conducteur étant constitué par un cordon de Transport International Routier (TIR).

2. Système de sécurité de véhicule selon la revendication 1, dans lequel le conducteur est un conducteur électrique, le signal étant un signal électrique.

3. Système selon les revendications 1 ou 2, dans lequel le signal électrique est un signal à variation dans le temps, le système englobant en outre un moyen pour surveiller la variation dans le temps du signal électrique pour surveiller ainsi la longueur du câble conducteur d'électricité.

4. Système selon la revendication 3, dans lequel le système englobe un circuit oscillateur formé par la connexion du câble à une porte logique, la fréquence ou la période d'oscillation du circuit étant déterminée en partie par la longueur du câble, la limite ou les plusieurs limites prédéterminées constituant une ou plusieurs valeurs de fréquence ou de période.

5. Système selon la revendication 2, dans lequel le signal électrique est constitué par une tension constante.

6. Système selon l'une quelconque des revendications précédentes, dans lequel au moins une limite prédéterminée a une valeur de tension supérieure.

7. Système selon l'une quelconque des revendications précédentes, dans lequel au moins une limite prédéterminée a une valeur de tension inférieure.

8. Système selon l'une quelconque des revendications précédentes, dans lequel une discontinuité est incluse dans le cordon TIR au niveau du point où le signal est appliqué au cordon, le signal surveillé étant reçu à partir d'une extrémité opposée du cordon.

9. Système selon la revendication 8, dans lequel la discontinuité est située dans une boîte de commande contenant aussi le moyen de connexion et le moyen de surveillance, la boîte de commande pouvant être fixée sur la zone de chargement.

10. Système selon la revendication 9, dans lequel un photodétecteur est agencé dans la boîte de commande, destiné à actionner l'alarme lors d'une ouverture non autorisée de la boîte de commande.

11. Système selon l'une quelconque des revendications précédentes, dans lequel l'alarme englobe un signal audible et/ou des voyants lumineux.

12. Système selon l'une quelconque des revendications précédentes, dans lequel le système comporte un affichage indiquant l'actionnement de l'alarme.

13. Système selon l'une quelconque des revendications précédentes, dans lequel le système comporte un affichage indiquant l'heure et la date de l'actionnement de l'alarme.

14. Système selon l'une quelconque des revendications précédentes, dans lequel le système comporte un affichage indiquant l'heure et la date du dernier réenclenchement de l'alarme.

15. Système selon l'une quelconque des revendications 12 à 14, dans lequel le système comporte un compteur comptant le nombre de réenclenchements de l'alarme.

16. Système selon la revendication 15, dans lequel l'affichage indique le nombre de réenclenchements de l'alarme.

17. Système selon l'une quelconque des revendications 12 à 15, dans lequel l'affichage est agencé dans une cabine du véhicule.

18. Système selon l'une quelconque des revendications 12 à 15, dans lequel l'affichage est agencé sur la zone de chargement.

19. Système selon l'une quelconque des revendications précédentes, dans lequel le système comporte un émetteur transmettant un signal électromagnétique lors de l'actionnement de l'alarme.

20. Système selon la revendication 19, dans lequel le signal est un signal de messagerie globale (GMS).

21. Système selon la revendication 20, dans lequel le signal est transmis à un téléphone mobile d'un conducteur et/ou à un centre de contrôle.

22. Système selon l'une quelconque des revendications 19 à 21, dans lequel le signal englobe des informations concernant l'heure et/ou le mode d'actionnement de l'alarme.

23. Système selon l'une quelconque des revendications précédentes, dans lequel le système comporte un moyen d'autorisation permettant un réenclenchement autorisé du système.

24. Système selon la revendication 23, dans lequel le système d'autorisation comprend un clavier.

25. Système selon l'une quelconque des revendications précédentes, dans lequel le système est alimenté par des batteries rechargeables.

26. Système selon l'une quelconque des revendications précédentes, dans lequel les extrémités du conducteur agencées à l'arrière de la zone de chargement sont connectées électriquement par l'intermédiaire d'une résistance.

27. Système selon la revendication 26, dans lequel la résistance est agencée à l'intérieur d'une boîte verrouillée dans une configuration fermée lors de l'application d'un scellé douanier.

28. Système selon la revendication 27, dans lequel la boîte comporte des connecteurs destinés à recevoir des connecteurs correspondants fixés sur les extrémités du conducteur, la boîte étant destinée à empêcher un retrait des connecteurs, et donc des extrémités du conducteur, de la boîte lorsque la boîte est verrouillée dans la configuration fermée.

29. Système selon la revendication 26, dans lequel la résistance est agencée dans une moitié d'un connecteur, le connecteur englobant un moyen de connexion électrique pour connecter électriquement la résistance à une moitié opposée du connecteur.

30. Système selon la revendication 29, dans lequel la moitié du connecteur dans laquelle est agencée la résistance est isolée du conducteur de sorte que l'électricité traversant le conducteur traverse la résistance.

31. Système selon l'une quelconque des revendications précédentes, dans lequel la zone de chargement comporte des crochets sur lesquels le conducteur peut être enroulé lorsqu'il n'est pas utilisé.

32. Système selon l'une quelconque des revendications précédentes, dans lequel un ou plusieurs capteurs sont agencés dans la zone de chargement, le ou les plusieurs capteur(s) étant connectés au moyen de surveillance.

33. Système selon la revendication 32 et selon l'une quelconque des revendications 26 à 30, dans lequel les capteurs sont connectés en série à la résistance.

34. Système selon l'une quelconque des revendications précédentes, dans lequel un commutateur est agencé au niveau d'un point où un rideau exerce, dans une configuration fermée, une pression contre un élément structural de la zone de chargement, le commutateur étant connecté au moyen de surveillance.

35. Système selon l'une quelconque des revendications précédentes, dans lequel le système comporte un dispositif de suivi surveillant l'emplacement de la zone de chargement.

36. Système selon la revendication 35, dans lequel l'alarme est configurée de sorte que l'actionnement de l'alarme entraîne la transmission d'un signal relatif à l'emplacement de la zone de chargement.

37. Système selon l'une quelconque des revendications précédentes, dans lequel la zone de chargement est une remorque comportant un raccord articulé.

38. Système selon l'une quelconque des revendications 1 à 36, dans lequel la zone de chargement et la cabine du véhicule constituent une seule unité.

39. Système selon l'une quelconque des revendications précédentes, dans lequel le conducteur électrique comprend une âme d'un cordon de Transport International Routier (TIR), l'âme étant isolée par rapport à l'extérieur du cordon TIR.

40. Système de sécurité de véhicule selon la revendication 1, dans lequel le conducteur est un conducteur à ultrasons, le signal étant un signal à ultrasons.

41. Système de sécurité de véhicule selon la revendication 40, dans lequel le moyen de connexion comprend un émetteur destiné à transmettre un signal d'impulsion à ultrasons, le moyen de surveillance comprenant un récepteur destiné à recevoir le signal d'impulsion à ultrasons.

42. Système de sécurité de véhicule selon la revendication 41, dans lequel l'émetteur et le récepteur sont agencés au niveau des extrémités opposées du conducteur à ultrasons.

43. Système de sécurité de véhicule selon la revendication 42, dans lequel la limite prédéterminée correspond au temps nécessaire au signal d'impulsion à ultrasons pour parvenir au récepteur.

44. Système de sécurité de véhicule selon la revendication 43, dans lequel une connexion électrique est établie entre l'émetteur et le récepteur pour permettre le passage de signaux de synchronisation entre l'émetteur et le récepteur.

45. Système de sécurité de véhicule selon la revendication 42, dans lequel l'émetteur et le récepteur sont agencés au niveau d'une extrémité du conducteur à ultrasons, le récepteur étant destiné à détecter une réflexion du signal d'impulsion à ultrasons sur la base d'une discontinuité dans le conducteur à ultrasons.

46. Système de sécurité de véhicule selon la revendication 45, dans lequel la limite prédéterminée correspond au temps nécessaire au signal d'impulsion à ultrasons pour parvenir au récepteur.

47. Système de sécurité de véhicule selon l'une quelconque des revendications 41 à 46, dans lequel le signal d'impulsion à ultrasons a une fréquence de l'ordre de 2 MHz.

48. Système de sécurité de véhicule selon la revendication 1, dans lequel le conducteur comprend une fibre optique, le signal comprenant un signal optique se propageant le long de la fibre optique.

49. Système de sécurité de véhicule selon la revendication 48, dans lequel la fibre optique comprend une âme d'un cordon de Transport International Routier (TIR).

50. Système de sécurité de véhicule selon les revendications 48 ou 49, dans lequel le moyen de transmission comprend une diode électroluminescente destinée à assurer le couplage de la lumière dans la fibre optique.

51. Système de sécurité de véhicule selon l'une quelconque des revendications 48 à 50, dans lequel le moyen de surveillance comprend une photodiode destinée à détecter la lumière transmise par la fibre optique.

52. Système de sécurité de véhicule selon l'une quelconque des revendications 48 à 51, dans lequel la limite prédéterminée est constituée par l'intensité du signal optique.

53. Système de sécurité de véhicule selon l'une quelconque des revendications précédentes, dans lequel le système comporte un moyen d'actionnement comprenant un émetteur à main.
